# EUROPEAN PATENT SPECIFICATION

(11) **EP 4 152 716 B1**
(45) Date of publication and mention of the grant of the patent: **28.01.2026**
(21) Application number: 21818645.0
(22) Date of filing: 15.05.2021
(51) Int. Cl.: H04L 9/40, H04L 69/22, H04L 69/167

(54) **PACKET PROCESSING METHOD, DEVICE AND SYSTEM**
PAKETVERARBEITUNGSVERFAHREN, -VORRICHTUNG UND -SYSTEM
PROCÉDÉ, DISPOSITIF ET SYSTÈME DE TRAITEMENT DE PAQUETS

(30) Priority: 05.06.2020 CN 202010508115; 19.06.2020 CN 202010566025
(43) Date of publication of application: 22.03.2023
(73) Proprietor: Huawei Technologies Co., Ltd., Longgang District, Shenzhen, Guangdong 518129 (CN)
(72) Inventor: PENG, Shuping, Shenzhen, Guangdong 518129 (CN); XIA, Yang, Shenzhen, Guangdong 518129 (CN)
(74) Representative: Isarpatent
(86) International application number: PCT/CN2021/093970
(87) International publication number: WO 2021/244262

(56) References cited:
- CN-A- 101 212 390
- CN-A- 101 360 046
- CN-A- 108 702 331
- CN-A- 110 832 813
- US-A1- 2012 236 864
- US-A1- 2020 084 300
- US-B1- 10 616 063

## Description

### TECHNICAL FIELD

This application relates to the field of communications technologies, and in particular, to a packet processing method, a device, and a system.

### BACKGROUND

Internet protocol version 6 (Internet Protocol version 6, IPv6) is a set of specifications designed by the Internet Engineering Task Force (Internet Engineering Task Force, IETF) and is an upgraded version of internet protocol version 4 (Internet Protocol version 4, IPv4). The IPv6 is a second-generation standard protocol for a network layer protocol, also called IP next generation (IP Next Generation, IPng).

IETF request for comments (Request For Comments, RFC) 8200 describes and explains a definition, a packet encapsulation format, and functions of the IPv6. Compared with the IPv4, the IPv6 has the following features: (1) The IPv6 extends a length of an internet protocol (Internet Protocol, IP) address from 32 bits to 128 bits, improving an addressing capability. (2) A header of an IPv6 packet is simplified. (3) The IPv6 supports more flexible extensions and options. (4) The IPv6 supports a flow label capability. (5) The IPv6 supports authentication and privacy protection capabilities.

In actual application scenarios, RFC 8200 does not specify specific actions for an extension header in the IPv6 packet. Each network device manufacturer performs private configurations based on service requirements of the network device manufacturer. However, the private configurations of the network device manufacturer may affect a normal packet forwarding process of a network device in an IP network.

US20120236864A1 describes embodiments of the present disclosure provide a method, device, and system for processing an IPv6 packet, which ensure a secure access, authentication, and authorization in an IPv6 network and allocate different IPv6 address prefixes to different terminals, ensuring normal routing of a network.

US10616063B1 describes various example embodiments for supporting stateless multicast in communication networks.

### SUMMARY

This application provides a packet processing method, a device, and a system, to resolve a prior-art problem that an IPv6 packet cannot be normally forwarded by a network device receiving the packet.

The present invention is defined in the attached claims.

### BRIEF DESCRIPTION OF DRAWINGS

FIG. 1 is a schematic diagram of a structure of a communications network according to an embodiment of this application;
FIG. 2 is a schematic diagram of a structure of another communications network according to an embodiment of this application;
FIG. 3 is a flowchart of a packet processing method according to an embodiment of this application;
FIG. 4 shows a format of a packet header of an IPv6 packet according to an embodiment of this application;
FIG. 5 shows a format of an IPv6 extension header according to an embodiment of this application;
FIG. 6a to FIG. 6c show formats of options in an IPv6 extension header according to an embodiment of this application;
FIG. 7 is a schematic diagram of a structure of a second network device according to an embodiment of this application;
FIG. 8 is a schematic diagram of a hardware structure of a second network device according to an embodiment of this application;
FIG. 9 is a schematic diagram of a hardware structure of another second network device according to an embodiment of this application;
FIG. 10 is a schematic diagram of a structure of a first network device according to an embodiment of this application;
FIG. 11 is a schematic diagram of a hardware structure of a first network device according to an embodiment of this application; and
FIG. 12 is a schematic diagram of a hardware structure of another first network device according to an embodiment of this application.

### DESCRIPTION OF EMBODIMENTS

The following describes the technical solutions of this application in detail by using specific embodiments.

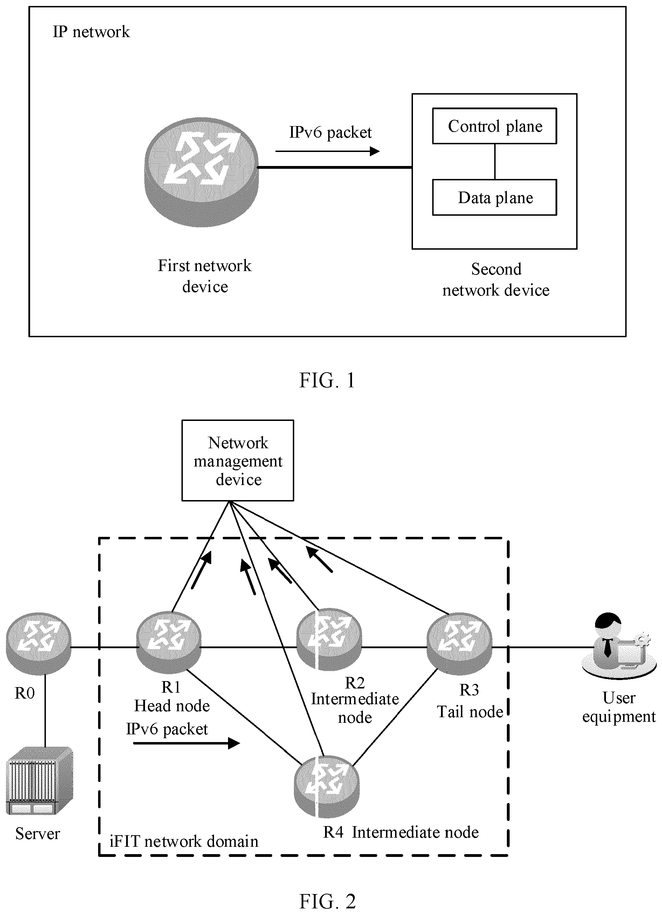

FIG. 1 is a schematic diagram of a structure of a communications network according to an embodiment of this application. As shown in FIG. 1, the communications network may be an IP network. The communications network includes a first network device and a second network device. The first network device may send an IPv6 packet to the second network device. Therefore, the communications network may be an IPv6 network. The first network device includes a router, a layer-3 switch, a terminal device, or a server. The second network device includes a router, a layer-3 switch, a terminal device, or a server. The first network device or the second network device may be a hardware device, for example, a router or a switch, or a virtual network device deployed on a hardware device. When the first network device or the second network device is the hardware device, the first network device or the second network device may include one or more forwarding boards, each forwarding board includes a physical port used to communicate with another network device, and each forwarding board may include a central processing unit (central processing unit, CPU).

The first network device may send the IPv6 packet to the second network device by using a wired link. For example, the first network device is a router, and the second network device is also a router. The first network device may send the IPv6 packet to the second network device by using a wireless link. For example, the first network device is a terminal device, and the second network device is a base station. The IPv6 packet may be generated by the first network device. For example, the first network device generates the IPv6 packet, and then sends the IPv6 packet to the second network device. Alternatively, the IPv6 packet may be forwarded by using the first network device. For example, the first network device receives an IPv6 packet sent by a previous-hop network device of the first network device, processes the IPv6 packet, and forwards the processed IPv6 packet to the second network device. The second network device processes the IPv6 packet after receiving the IPv6 packet sent by the first network device. If the second network device is connected to a next-hop network device, the second network device may further forward the processed IPv6 packet to the next-hop device.

As shown in FIG. 1, the second network device may include a control plane and a data plane. The control plane is configured to control and manage running of a network protocol on the communications network and provide various network information and forwarding entries required by the data plane. The data plane may also be referred to as a forwarding plane or a user plane, and is configured to process and forward various types of data on an interface of a network device. In addition, the second network device may further include a management plane. The management plane is oriented to system operation maintenance personnel and provides input and output, user management, license (license), and monitoring, configuration, alarms, and statistics of managed objects. In a possible implementation, the management plane is not separately set, but a function of the management plane is included in the control plane.

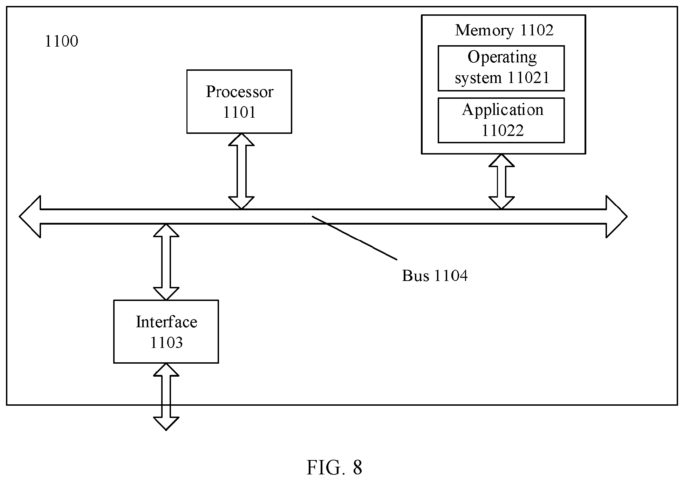

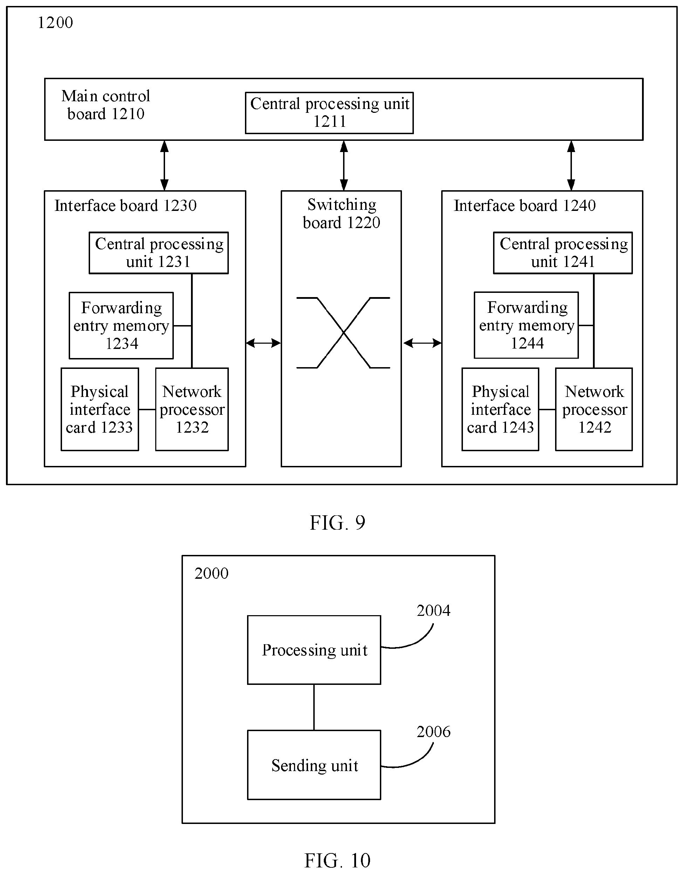

In a possible implementation, a control plane and a data plane of the second network device are implemented in a same function entity, for example, as shown in FIG. 8 of this application. FIG. 8 shows a hardware implementation of the second network device. A processor in FIG. 8 is configured to implement a control plane and a data plane of the second network device. In another possible implementation, the control plane and the data plane of the second network device are implemented in different function entities, for example, as shown in FIG. 9 of this application. FIG. 9 shows another hardware implementation of the second network device. In FIG. 9, a main control board is configured to implement a control plane of the second network device, and an interface board is configured to implement a data plane of the second network device. Specifically, a central processing unit on the main control board is configured to implement the control plane of the second network device, and a central processing unit on the interface board is configured to implement the data plane of the second network device. In addition, the main control board and the interface board in FIG. 9 may be implemented by two independent network devices. In other words, the second network device includes the two independent network devices, and the two independent network devices respectively implement the control plane and the data plane.

The second network device receives the IPv6 packet sent by the first network device, where the IPv6 packet includes a packet header and a payload. According to the definition of RFC 8200, the packet header of the IPv6 packet includes an IPv6 header (Section 3 of RFC 8200). The IPv6 header includes next header (Next Header) information, which may also be referred to as a next header field. If a value of the next header information in the IPv6 header is 0, it indicates that a next header of the IPv6 header is a hop-by-hop options header (Hop-by-Hop Options Header). For ease of description, an "HBH header" is used in this application to represent the hop-by-hop options header. That the HBH header is the next header of the IPv6 header means that the HBH header immediately follows (immediately following) the IPv6 header. Specifically, the HBH header is encapsulated between the IPv6 header and the payload of the IPv6 packet, and is adjacent to the IPv6 header. As explained in Section 4.3 of RFC 8200, the HBH header is processed by a network device at each hop of a path for transmitting the IPv6 packet. Further, the HBH header includes option information, and the option information is processed by a network device at each hop of the path for transmitting the IPv6 packet.

The HBH header includes option (Option) information. For details, refer to section 4.2 of RFC 8200. The option information includes option type (Option Type) information, option data length (Opt Data Len) information, and option data. A length of the option type information is 8 bits (bits). The most significant two bits of the option type information determine an action to be performed by the network device when the network device receiving the IPv6 header cannot identify the option type information. For example, if values of the most significant two bits are 00, it indicates that the network device is to skip the option information and continue to process the header of the IPv6 packet. A specific processing process further includes processing a header indicated by next header information in the HBH header in the IPv6 packet. If values of the most significant two bits are 01, it indicates that the network device is to discard the IPv6 packet. If values of the most significant two bits are 10 or 11, it indicates that the network device is to discard the IPv6 packet and send a message including an internet control message protocol (Internet Control Message Protocol, ICMP) parameter. Therefore, RFC 8200 specifies a simple action (skipping option information or discarding the packet) that is to be performed on the IPv6 packet including the HBH header when the option type information in the HBH header cannot be identified. However, RFC 8200 does not specify a specific action manner for the IPv6 packet including the HBH header. Currently, a processing manner commonly used by network devices of various vendors is as follows: a network device determines that a value of next header information in an IPv6 header in an IPv6 packet is 0, and the network device can determine that a next header of the IPv6 header is an HBH header. Then, the network device sends the IPv6 packet from a data plane of the network device to a control plane of the network device. The network device processes all IPv6 packets including HBH headers on the control plane of the network device. As a result, not only pressure on the control plane of the network device is increased, but also normal forwarding of the IPv6 packets may be affected. For example, the option type information in the HBH header may be identified by the data plane of the network device, but cannot be identified by the control plane of the network device. After determining that the IPv6 packet includes the HBH header, the network device directly sends the IPv6 packet to the control plane of the network device. After receiving the IPv6 packet, the control plane of the network device may skip the HBH header or directly discard the IPv6 packet. Consequently, this processing manner affects normal forwarding of the IPv6 packet. For example, the network device processes all IPv6 packets including HBH headers on the control plane of the network device. However, bandwidth resources of a channel between the data plane and the control plane of the network device are limited. If a large quantity of IPv6 packets are sent to the control plane through the channel, packets may be lost due to insufficient bandwidth resources of the channel. Consequently, this processing manner affects normal forwarding of the IPv6 packet.

To resolve the foregoing problem, this application provides corresponding solutions. Refer to FIG. 1. A first network device sends an IPv6 packet to a second network device, and the second network device receives the IPv6 packet. The IPv6 packet includes an IPv6 header and an IPv6 extension header, and the IPv6 extension header indicates that the network device receiving the IPv6 packet is to perform an action in the IPv6 extension header on a data plane or a control plane. After receiving the IPv6 packet sent by the first network device, the second network device performs the action in the IPv6 extension header on a corresponding processing plane of the second network device based on the IPv6 header and the IPv6 extension header in the IPv6 packet. This ensures that the IPv6 packet can be normally forwarded by the second network device.

FIG. 2 is a schematic diagram of a structure of another communications network according to an embodiment of this application. As shown in FIG. 2, the communications network includes routers R0, R1, R2, R3, R4, and R5. The routers R0, R1, R2, and R3 are sequentially connected through links, and the router R4 is connected to the router R2 and the router R3 through links. The router R0 is further connected to a server through a link, and the router R3 is further connected to user equipment through a link. In addition, the communications network further includes a network management device, and the network management device is connected to the routers R1, R2, R3, and R4 through links. The communications network includes an in-situ flow information telemetry (In-situ Flow Information Telemetry, iFIT) network domain, and the iFIT network domain includes the routers R1, R2, R3, and R4. The router R1 is an ingress node of the iFIT network domain, the router R2 and the router R4 are intermediate nodes of the iFIT network domain, and the router R3 is an egress node of the iFIT network domain. The router R0 may be an edge router. The server may send an IPv6 packet to the user equipment through the router R0 and the iFIT network domain. The server may also receive, through the router R0 and the iFIT network domain, an IPv6 packet sent by the user equipment.

This embodiment of this application provides descriptions by using an example in which the server sends an IPv6 packet to the user equipment. A network device in the iFIT network domain may perform in-situ flow service performance measurement on a data flow, and report a measurement result to the network management device. In the network shown in FIG. 2, if the server sends a data flow including the IPv6 packet to the user equipment through the routers R0, R1, R2, and R4, a reporting manner of the iFIT network domain may be set to egress node reporting. To be specific, the router R4 is responsible for reporting a measurement result to the network management device. In this way, an IPv6 extension header provided in this application may be used to implement in-situ flow service performance measurement in the iFIT network domain. The IPv6 extension header provided in this application is an improvement on the HBH header defined in RFC 8200, and therefore may be referred to as a "new HBH header". In this embodiment of this application, unless special descriptions are added, an "HBH header" means the HBH header defined in RFC 8200, and a "new HBH header" means the IPv6 extension header proposed in this application.

The router R1 is the ingress node of the iFIT network domain, and is responsible for initiating corresponding measurement based on an in-situ flow service performance measurement task received from the network management device. Specifically, the router R1 receives a packet (which may be an IPv6 packet) sent by the router R0. A first new HBH header is encapsulated in the packet to obtain an IPv6 packet. The IPv6 packet includes an IPv6 header and the first new HBH header. The first new HBH header is a next header of the IPv6 header. The router R1 sends the IPv6 packet to the router R2. After receiving the IPv6 packet, the router R2 may determine, based on the IPv6 header and the first new HBH header, an action in the first new HBH header to be performed by the router R2 on a data plane. Specifically, the first new HBH header includes option information, and a type indicated by option type information in the option information is in-situ flow service performance measurement (for example, detection in the iFIT network domain). Option data in the option information indicates a specific action (for example, delay detection) corresponding to the measurement task. The router R2 carries out the measurement task based on the indication of the option type information, performs the specific action based on the indication of the option data, and adds a measurement result to the option data in the option information. The router R2 then sends an updated IPv6 packet to the router R3. The router R3 performs in-situ flow service performance measurement in a same manner as the router R2, and reports a measurement result to the network management device. The IPv6 packet further includes an iFIT header. Usually, the iFIT header may be encapsulated in a payload in the IPv6 packet.

In the implementation shown in FIG. 2, the in-situ flow service performance measurement in the iFIT network domain may be implemented based on the new HBH header. On the contrary, if the new HBH header in this application is not used, but the HBH header defined in RFC 8200 is used as the next header of the IPv6 header, the router R1 may directly send the received IPv6 packet to a control plane of the router R1. The control plane of the router R1 may skip the HBH header or directly discard the IPv6 packet. As a result, in-situ flow service performance measurement cannot be performed, and the IPv6 packet may not be normally forwarded. Further, network devices in the network may come from different vendors. According to RFC 8200, a definition of a corresponding action in an HBH header is determined based on a configuration of a network device. Therefore, services may fail to be interconnected due to different configurations from different vendors.

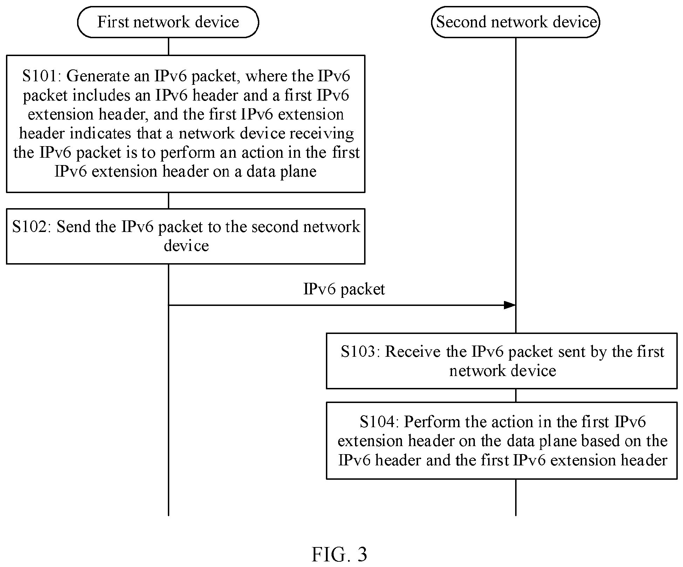

FIG. 3 is a flowchart of a packet processing method according to an embodiment of this application. The method shown in FIG. 3 may be applied to the network structure shown in FIG. 1 or FIG. 2. In this embodiment of this application, for ease of description, a "first network device" and a "second network device" are used for description. It should be understood that the "first network device" may be the router R1 in FIG. 2, and the "second network device" may be the router R2 or the router R3 in FIG. 2. Specifically, the method includes the following steps.

S101: The first network device generates an IPv6 packet, where the IPv6 packet includes an IPv6 header and a first IPv6 extension header, and the first IPv6 extension header indicates that a network device receiving the IPv6 packet is to perform an action in the first IPv6 extension header on a data plane.

S102: The first network device sends the IPv6 packet to the second network device.

In a possible implementation, the first network device receives a first packet sent by a previous-hop network device of the first network device. The first packet is not an IPv6 packet. Then, the first network device encapsulates the first packet as the IPv6 packet according to an IPv6 protocol. In another possible implementation, the first network device receives a first packet sent by a previous-hop network device of the first network device. The first packet is an IPv6 packet. Then, the first network device updates the first packet, to obtain the IPv6 packet. An update process includes adding the first IPv6 extension header to the first packet.

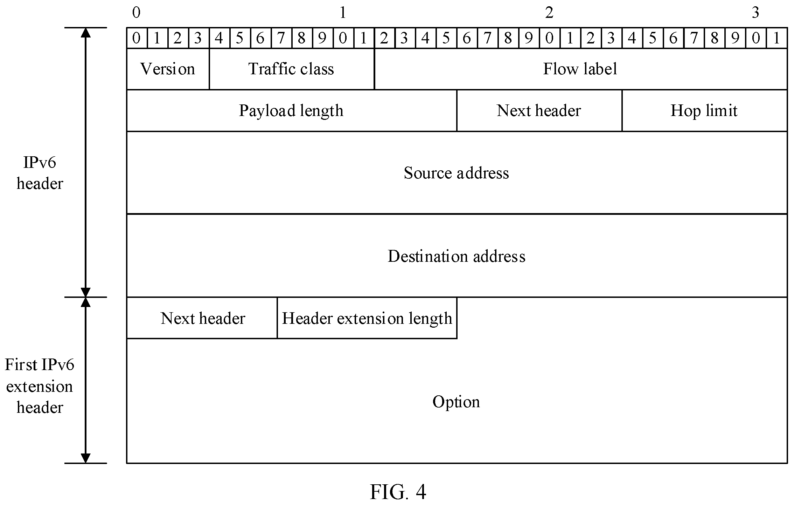

With reference to the foregoing implementations, the first IPv6 extension header may be a new HBH header. FIG. 4 shows formats of the IPv6 header and the first IPv6 extension header in the IPv6 packet. The IPv6 header indicates that a protocol type of the IPv6 packet is IPv6. The IPv6 header includes version (Version) information, traffic class (Traffic Class) information, flow label (Flow Label) information, payload length (Payload Length) information, next header (Next Header) information, hop limit (Hop Limit) information, source address (Source Address) information, and destination address (Destination Address) information. For example, a value of the next header information in the IPv6 header (for ease of description, the next header information in the IPv6 header is referred to as "first next header information" below) is TBD. TBD indicates that a next header of the IPv6 header is the first IPv6 extension header. In other words, the first IPv6 extension header is encapsulated between the IPv6 header and a payload of the IPv6 packet, and is adjacent to the IPv6 header, as shown in FIG. 4. "TBD" is merely an example representation, and a specific value may be determined by a related standards organization.

That the value of the first next header information is TBD indicates that the next header of the IPv6 header is the first IPv6 extension header. In addition, that the value of the first next header information is TBD may further indicates that the network device receiving the IPv6 packet is to process the first IPv6 extension header on the data plane. In other words, if the network device receiving the IPv6 packet determines that the value of the first next header information is TBD, the network device processes the IPv6 packet on the data plane of the network device, instead of sending the IPv6 packet to a control plane of the network device for processing. This clearly differs from the implementation of the HBH header specified in RFC 8200 in the foregoing implementation.

In an implementation of this application, the first IPv6 extension header is processed by a network device at each hop of a path for transmitting the IPv6 packet. In other words, a network device at each hop of the path for transmitting the IPv6 packet checks and processes the first IPv6 extension packet. Further, the first IPv6 extension header includes option information, and the option information is processed by a network device at each hop of the path for transmitting the IPv6 packet.

Refer to FIG. 4. The first IPv6 extension header includes next header information, header extension length (Hdr Ext Len) information, and option information. According to the foregoing description, that the value of the first next header information is TBD indicates that the next header of the IPv6 header is the first IPv6 extension header, and indicates that the network device receiving the IPv6 packet is to process the first IPv6 extension header on the data plane. The option information in the first IPv6 extension header stores a specific action that needs to be performed on the data plane. Further, the option information includes option data, and the option data stores the specific action that needs to be performed on the data plane. For a specific implementation, refer to subsequent descriptions in this embodiment. In a possible implementation, a value of the next header information in the first IPv6 extension header is 0, indicating that a next header of the first IPv6 extension header is an HBH header. In other words, the HBH header defined in RFC 8200 can be encapsulated after the new HBH header. In this way, after processing the first IPv6 extension header on the data plane, the network device receiving the IPv6 packet sends the IPv6 packet to the control plane of the network device, and processes the HBH header on the control plane.

The IPv6 packet further includes a payload (not shown in FIG. 4). If the value of the next header information in the first IPv6 extension header indicates that there is no next header of the first IPv6 extension header, the payload immediately follows the first IPv6 extension header. If the next header of the first IPv6 extension header is the HBH header, the payload may immediately follow the HBH header. Optionally, there may be other headers before the payload.

S103: The second network device receives the IPv6 packet sent by the first network device.

S104: The second network device performs the action in the first IPv6 extension header on the data plane of the second network device based on the IPv6 header and the first IPv6 extension header.

With reference to the foregoing descriptions, the second network device receives the IPv6 packet sent by the first network device. For example, the IPv6 packet is a data packet. The second network device receives the IPv6 packet by using the data plane of the second network device, for example, receives the IPv6 packet by using an interface board. The IPv6 packet includes the IPv6 header and the first IPv6 extension header. The second network device obtains the IPv6 header in the IPv6 packet after receiving the IPv6 packet. Then, the second network device processes the IPv6 header, and obtains the first next header information in the IPv6 header. For example, the second network device may determine, based on the fact that the value of the first next header information is TBD, that the next header of the IPv6 header is the first IPv6 extension header, and determine to process the first IPv6 extension header on the data plane of the second network device. Correspondingly, the second network device does not send the IPv6 packet to the control plane of the second network device, but continues to process the next header of the IPv6 header, that is, the first IPv6 extension header, on the data plane of the second network device.

After determining the first IPv6 extension header based on the IPv6 header, the second network device performs the action in the first IPv6 extension header on the data plane based on the first IPv6 extension header, and obtains the option information in the first IPv6 extension header, as shown in FIG. 4.

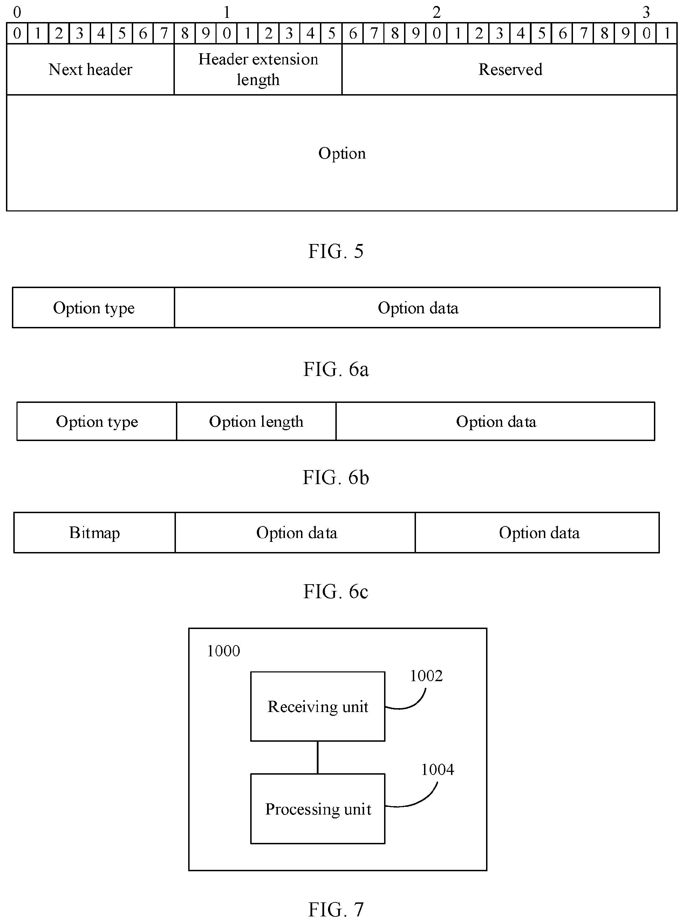

Then, further, FIG. 6a, FIG. 6b, and FIG. 6c illustrate an implementation of the option information in the first IPv6 extension header in FIG. 4. In other words, the option information in the first IPv6 extension header may be implemented in a manner shown in FIG. 6a, FIG. 6b, or FIG. 6c.

Refer to FIG. 6a. The option information includes option type information and option data. A length of the option type information may be 8 bits. The option type information not only indicates a type of the option information, but also indicates a length of the option data. For example, a value of the option type information is "11001100". "11001100" indicates that the type of the option information is "delay detection in an iFIT network domain" and indicates that the length of the option data is AA bytes. Therefore, the second network device stores a correspondence between the value "11001100", "delay detection in the iFIT network domain" and "AA bytes". When the second network device determines that the value of the option type information is " 11001100", the second network device may find corresponding "delay detection in the iFIT network domain" and "AA bytes". Therefore, the second network device can determine that the type of the option information is "delay detection in the iFIT network domain" and the length of the option data is AA bytes. The second network device performs, on the data plane, the action (measuring a transmission delay) indicated by the option type information, and adds a measurement result to the option data. Therefore, the second network device may process the first IPv6 extension header on the data plane of the second network device. In the implementation shown in FIG. 6a, a length of the option information is reduced, and therefore a length of the IPv6 packet is reduced.

Refer to FIG. 6b. The option information includes option type information, option length information, and option data. A length of the option type information may be 8 bits. For a definition of the option type information in FIG. 6b, refer to the explanation in FIG. 6a. That is, the option type information not only indicates a type of the option information, but also indicates a length of the option data. Compared with FIG. 6a, the option information implemented in FIG. 6b further includes option length information, and the option length information indicates the length of the option data. When the second network device processes the option information in the first IPv6 extension header on the data plane, the second network device obtains the option type information in the option information. The second network device determines whether the option type information can be identified. In other words, the second network device determines whether the second network device is capable of parsing and processing the option type information. Correspondingly, if the second network device determines that the option type information can be identified, the second network device determines the length of the option data based on the option type information, and does not need to determine the length of the option data based on the option length information. If the second network device determines that the option type information cannot be identified, the second network device determines the length of the option data based on the option length information. In the implementation shown in FIG. 6b, it is ensured that the second network device can skip an unidentifiable data part in the packet and continue to process an identifiable part in the packet when the option type information cannot be identified.

Optionally, the first IPv6 extension header includes first option information and second option information, the first option information includes first option type information and first option data, the second option information includes second option type information and second option data, the first option type information indicates a type of the first option information and a length of the first option data, and the second option type information indicates a type of the second option information and a length of the second option data. Further, optionally, the first IPv6 extension header includes a bitmap, the bitmap includes a first bit and a second bit, the first bit indicates the first option type information, and the second bit indicates the second option type information.

Refer to FIG. 6c. The option information includes a bitmap (bitmap) and a plurality of pieces of option data. A length of the bitmap may be 16 bits. In the implementation shown in FIG. 6c, the plurality of pieces of option information may be implemented by using the bitmap. Specifically, the 16 bits of the bitmap may respectively represent 16 option types, that is, each bit represents one option type. For example, a value of the bitmap is "0000000000000011", indicating 16 option types. The least significant bit in the bitmap indicates an option type 1, a second least significant bit in the bitmap indicates an option type 2, ... , and the most significant bit in the bitmap indicates an option type 16. A value of each bit is 0 or 1. When a value of a bit is set to 0, an option type corresponding to the bit is disabled. When a value of a bit is set to 1, an option type corresponding to the bit is enabled. According to the foregoing descriptions, when the length of the bitmap is 16 bits, a maximum quantity of the plurality of pieces of option data is 16.

For example, a value of the bitmap is "0000000000000011". Values from a bit 3 to a bit 16 are all 0, indicating that an option type 3 to an option type 16 are disabled. A value of a bit 1 is 1, indicating that an option type 1 (the first option type information) is enabled. Therefore, the option information further includes the first option data. In other words, the first option information includes the first option type information and the first option data. A position and a value of the first option type information in the bitmap determine a type of the first option information and a length of the first option data that are indicated by the first option type information. Similarly, a value of a bit 2 is 1, indicating that an option type 2 (the second option type information) is enabled. Therefore, the option information further includes the second option data. In other words, the second option information includes the second option type information and the second option data. A position and a value of the second option type information in the bitmap determine a type of the second option information and a length of the second option data that are indicated by the second option type information. In the foregoing manner, aggregation of plurality of pieces of sub-option information may be implemented by using one piece of option information.

Optionally, the IPv6 packet further includes a second IPv6 extension header, the second IPv6 extension header indicates that the network device receiving the IPv6 packet is to perform an action in the second IPv6 extension header on the control plane, the second IPv6 extension header is a next header of the first IPv6 extension header, and the method further includes: The second network device performs the action in the second IPv6 extension header on the control plane of the second network device based on the first IPv6 extension header and the second IPv6 extension header.

According to the preceding implementation, the IPv6 packet includes the IPv6 header, and the first IPv6 extension header is the next header of the IPv6 header. The first IPv6 extension header includes the first next header information. A value of the first next header information may be 0, indicating that the next header of the first IPv6 extension header is the HBH header (the second IPv6 extension header) defined in RFC 8200. The second network device processes the first IPv6 extension header on the data plane of the second network device according to the foregoing implementation, and determines, based on the fact that the value of the first next header information in the first IPv6 extension header is 0, that the next header of the first IPv6 extension header is the HBH header. According to the preceding implementation, the second network device may send the IPv6 packet to the control plane of the second network device and process the HBH header on the control plane.

Optionally, the first IPv6 extension header includes processing plane information, and the processing plane information indicates that the network device receiving the IPv6 packet is to perform the action in the first IPv6 extension header on the data plane.

In the foregoing implementation, the new HBH header is provided as the next header of the IPv6 header in the IPv6 packet, to ensure that the network device can process the IPv6 packet on the data plane. In a possible implementation, the HBH header defined in RFC 8200 may be extended, so that the network device can determine to process the extended HBH header on the data plane or the control plane of the network device based on the extended HBH header.

For example, the second network device receives the IPv6 packet sent by the first network device. The IPv6 packet includes the IPv6 header and the first IPv6 extension header. The first IPv6 extension header is the extended HBH header. As shown in FIG. 5, compared with the HBH header defined in RFC 8200, the extended HBH header includes reservation information, and a length of the reservation information may be 2 bytes. The reservation information includes the processing plane information, and the second network device may determine to process the extended HBH header on the data plane of the second network device or to process the extended HBH header on the control plane of the second network device based on a value of the processing plane information. According to the foregoing implementation, the value of the first next header information in the IPv6 header indicates that the next header of the IPv6 header is the extended HBH header. After obtaining the first next header information in the IPv6 header, the second network device does not directly determine to maintain the IPv6 packet on the data plane or send the IPv6 packet to the control plane. The second network device further obtains the processing plane information in the reservation information in the extended HBH header. For example, a value of the processing plane information is 00, indicating the control plane. After the second network device determines that the value of the processing plane information is 00, the second network device sends the IPv6 packet to the control plane, and the second network device processes the extended HBH header on the control plane. For another example, a value of the processing plane information is 11, indicating the data plane. After the second network device determines that the value of the processing plane information is 11, the second network device maintains the IPv6 packet on the data plane, and the second network device processes the extended HBH header on the data plane.

Optionally, the first IPv6 extension header includes processing policy information, and the processing policy information indicates an action to be performed by the network device receiving the IPv6 packet on at least one piece of option information included in the first IPv6 extension header.

The reservation information in the extended HBH header may further include the processing policy information. The processing policy information indicates that the second network device is to process a plurality of pieces of option information in the first IPv6 extension header. For example, the first IPv6 extension header includes option information 1, option information 2, and option information 3. The option information 1, the option information 2, and the option information 3 are all implemented in a type-length-value (type-length-value, TLV) manner. The action indicated by the processing policy information is applicable to the option information 1, the option information 2, and the option information 3.

In a similar implementation, the foregoing new HBH header may also include the processing policy information, so as to implement processing of the plurality of pieces of option information.

In this embodiment of this application, the first IPv6 extension header is processed by a network device at each hop of a path for transmitting the IPv6 packet. In other words, a network device at each hop of the path for transmitting the IPv6 packet checks and processes the first IPv6 extension packet. Further, the first IPv6 extension header includes option information, and the option information is processed by the network device at each hop of the path for transmitting the IPv6 packet.

According to the foregoing implementation, the first IPv6 extension header is the next header of the IPv6 header, and when the IPv6 packet includes any other extension header, the first IPv6 extension header is located before the any other extension header.

According to the foregoing implementation, after receiving the IPv6 packet sent by the first network device, the second network device performs the action in the IPv6 extension header on a corresponding processing plane of the second network device based on the IPv6 header and the IPv6 extension header in the IPv6 packet, so as to ensure that the IPv6 packet can be normally forwarded by the second network device.

FIG. 7 is a schematic diagram of a structure of a second network device 1000 according to an embodiment of this application. The second network device 1000 shown in FIG. 7 may perform corresponding steps that are performed by the second network device in the method in the foregoing embodiment. The second network device is deployed in a communications network, and the communications network further includes a first network device. As shown in FIG. 7, the second network device 1000 includes a receiving unit 1002 and a processing unit 1004.

The receiving unit 1002 is configured to receive an IPv6 packet sent by the first network device, where the IPv6 packet includes an IPv6 header and a first IPv6 extension header, and the first IPv6 extension header indicates that a network device receiving the IPv6 packet is to perform an action in the first IPv6 extension header on a data plane.

The processing unit 1004 is configured to perform the action in the first IPv6 extension header on the data plane of the second network device based on the IPv6 header and the first IPv6 extension header.

Optionally, the IPv6 header includes next header information, and the next header information indicates that a next header of the IPv6 header is the first IPv6 extension header.

Optionally, the next header information further indicates that the network device receiving the IPv6 packet is to process the first IPv6 extension header on the data plane.

Optionally, when performing the action in the first IPv6 extension header on the data plane of the second network device based on the IPv6 header and the first IPv6 extension header, the processing unit 1004 is configured to determine, based on the next header information, that the next header of the IPv6 header is the first IPv6 extension header; and the processing unit 1004 is further configured to perform the action in the first IPv6 extension header on the data plane of the second network device based on the first IPv6 extension header.

Optionally, the first IPv6 extension header includes option information, the option information includes option type information and option data, and the option type information indicates a type of the option information and a length of the option data.

Optionally, the first IPv6 extension header includes option information; the option information includes option type information, option length information, and option data; the option type information indicates a type of the option information and a length of the option data; and the option length information indicates the length of the option data. Before the processing unit 1004 performs the action in the first IPv6 extension header on the data plane of the second network device based on the IPv6 header and the first IPv6 extension header, the processing unit 1004 is further configured to: determine that the option type information can be identified, and determine the length of the option data based on the option type information but not based on the option length information.

Optionally, the first IPv6 extension header includes option information; the option information includes option type information, option length information, and option data; the option type information indicates a type of the option information and a length of the option data; and the option length information indicates the length of the option data. Before the processing unit 1004 performs the action in the first IPv6 extension header on the data plane of the second network device based on the IPv6 header and the first IPv6 extension header, the processing unit 1004 is further configured to: determine that the option type information cannot be identified, and determine the length of the option data based on the option length information.

Optionally, the first IPv6 extension header includes first option information and second option information, the first option information includes first option type information and first option data, the second option information includes second option type information and second option data, the first option type information indicates a type of the first option information and a length of the first option data, and the second option type information indicates a type of the second option information and a length of the second option data.

Optionally, the first IPv6 extension header includes a bitmap, the bitmap includes a first bit and a second bit, the first bit indicates the first option type information, and the second bit indicates the second option type information.

Optionally, the IPv6 packet further includes a second IPv6 extension header, the second IPv6 extension header indicates that the network device receiving the IPv6 packet is to perform an action in the second IPv6 extension header on a control plane, the second IPv6 extension header is a next header of the first IPv6 extension header, and the processing unit 1004 is further configured to perform the action in the second IPv6 extension header on the control plane of the second network device based on the first IPv6 extension header and the second IPv6 extension header.

Optionally, the first IPv6 extension header includes processing plane information, and the processing plane information indicates that the network device receiving the IPv6 packet is to perform the action in the first IPv6 extension header on the data plane.

Optionally, the first IPv6 extension header includes processing policy information, and the processing policy information indicates an action to be performed by the network device receiving the IPv6 packet on at least one piece of option information included in the first IPv6 extension header.

Optionally, the second network device 1000 further includes a sending unit, and the sending unit is configured to send a processed IPv6 packet to a third network device.

The second network device shown in FIG. 7 may perform corresponding steps that are performed by the second network device in the method in the foregoing embodiment. The second network device receives the IPv6 packet sent by the first network device, and performs the action in the IPv6 extension header on a corresponding processing plane of the second network device based on the IPv6 header and the IPv6 extension header in the IPv6 packet, so as to ensure that the IPv6 packet can be normally forwarded by the second network device.

FIG. 8 is a schematic diagram of a hardware structure of a second network device 1100 according to an embodiment of this application. The second network device 1100 shown in FIG. 8 may perform corresponding steps that are performed by the second network device in the method in the foregoing embodiment.

As shown in FIG. 8, the second network device 1100 includes a processor 1101, a memory 1102, an interface 1103, and a bus 1104. The interface 1103 may be implemented in a wireless or wired manner. The processor 1101, the memory 1102, and the interface 1103 are connected through the bus 1104.

The interface 1103 may specifically include a transmitter and a receiver, and is used by the second network device to receive information from and send information to the first network device in the foregoing embodiment. For example, the interface 1103 is configured to support receiving of an IPv6 packet sent by the first network device, or configured to support forwarding of a processed IPv6 packet. For example, the interface 1103 is configured to support the process S103 in FIG. 3. The processor 1101 is configured to perform processing performed by the second network device in the foregoing embodiment. For example, the processor 1101 is configured to perform an action in an IPv6 extension header, and/or support other processes for the techniques described herein. For example, the processor 1101 is configured to support the process S104 in FIG. 3. The memory 1102 is configured to store a program, code, or instructions, for example, store an action system 11021 and an application 11022. When executing the program, the code, or the instructions, the processor or a hardware device can complete the processing processes related to the second network device in the method embodiment. Optionally, the memory 1102 may include a read-only memory (Read-only Memory, ROM) and a random access memory (Random Access Memory, RAM). The ROM includes a basic input/output system (Basic Input/Output System, BIOS) or an embedded system, and the RAM includes an application and an action system. When the second network device 1100 needs to be run, a bootloader in the BIOS or the embedded system that is fixed in the ROM is used to boot a system to be started, to boot the second network device 1100 to enter a normal running state. After entering the normal running state, the second network device 1100 runs the application and the action system in the RAM, to complete the processing processes related to the second network device in the method embodiment.

It may be understood that FIG. 8 shows merely a simplified design of the second network device 1100. In actual application, the second network device may include any quantity of interfaces, processors, or memories.

FIG. 9 is a schematic diagram of a hardware structure of another second network device 1200 according to an embodiment of this application. The second network device 1200 shown in FIG. 9 may perform corresponding steps that are performed by the second network device in the method in the foregoing embodiment.

As shown in FIG. 9, the second network device 1200 includes a main control board 1210, an interface board 1230, a switching board 1220, and an interface board 1240. The main control board 1210, the interface boards 1230 and 1240, and the switching board 1220 are connected to a system backboard through a system bus for mutual communication. The main control board 1210 is configured to complete functions such as system management, device maintenance, and protocol processing. The switching board 1220 is configured to implement data exchange between interface boards (the interface board is also referred to as a line card or a service board). The interface boards 1230 and 1240 are configured to provide various service interfaces (for example, a POS interface, a GE interface, and an ATM interface), and forward a data packet.

The interface board 1230 may include a central processing unit 1231, a forwarding entry memory 1234, a physical interface card 1233, and a network processor 1232. The central processing unit 1231 is configured to control and manage the interface board, and communicate with a central processing unit on the main control board. The forwarding entry memory 1234 is configured to store a forwarding entry. The physical interface card 1233 is configured to receive and send traffic. The network memory 1232 is configured to control, based on the forwarding entry, the physical interface card 1233 to receive and send the traffic.

Specifically, the physical interface card 1233 is configured to receive an IPv6 packet sent by a first network device. The physical interface card 1233 is further configured to forward a processed IPv6 packet.

After receiving the IPv6 packet, the physical interface card 1233 sends the IPv6 packet to the central processing unit 1231. The central processing unit 1231 determines, based on information in a packet header of the IPv6 packet, that the IPv6 packet needs to be processed by the central processing unit 1231. Correspondingly, the central processing unit 1231 processes the IPv6 packet.

Optionally, after receiving the IPv6 packet, the physical interface card 1233 sends the IPv6 packet to the central processing unit 1231, and the central processing unit 1231 determines, based on the information in the packet header of the IPv6 packet, that the IPv6 packet needs to be processed by the central processing unit 1211. The central processing unit 1231 sends the IPv6 packet to the central processing unit 1211, and the central processing unit 1211 processes the IPv6 packet.

The central processing unit 1231 is further configured to control the network memory 1232 to obtain a forwarding entry from the forwarding entry memory 1234, and the central processing unit 1231 is further configured to control the network memory 1232 to forward the processed IPv6 packet to a third network device by using the physical interface card 1233.

It should be understood that actions of the interface board 1240 are consistent with actions of the interface board 1230 in this embodiment of the present invention. For brevity, details are not described again. It should be understood that the second network device 1200 in this embodiment may correspond to the functions and/or the various steps implemented in the foregoing method embodiment. Details are not described herein again.

In addition, it should be noted that there may be one or more main control boards, and when there are a plurality of main control boards, the main control boards may include an active main control board and a standby main control board. There may be one or more interface boards, and the second network device with a stronger data processing capability provides more interface boards. There may also be one or more physical interface cards on the interface board. There may be no switching board, or there may be one or more switching boards. When there are a plurality of switching boards, load sharing and redundancy backup may be implemented jointly. In a centralized forwarding architecture, the second network device may not need a switching board. The interface board implements a service data processing function of the entire system. In a distributed forwarding architecture, the second network device may have at least one switching board. Data is exchanged between a plurality of interface boards by using the switching board, to provide a large-capacity data exchange and processing capability. Therefore, a data access and processing capability of the second network device in the distributed architecture is better than that of the second network device in the centralized architecture. A specific architecture to be used depends on a specific networking deployment scenario. This is not limited herein.

In addition, an embodiment of this application provides a computer storage medium, configured to store computer software instructions used by the foregoing second network device. The computer storage medium includes a program designed for executing the foregoing method embodiment.

FIG. 10 is a schematic diagram of a structure of a first network device 2000 according to an embodiment of this application. The first network device 2000 shown in FIG. 10 may perform corresponding steps performed by the first network device in the method in the foregoing embodiment. The first network device is deployed in a communications network, and the communications network further includes a second network device. As shown in FIG. 10, the first network device 2000 includes a processing unit 2004 and a sending unit 2006.

The processing unit 2004 is configured to generate an IPv6 packet, where the IPv6 packet includes an IPv6 header and a first IPv6 extension header, and the first IPv6 extension header indicates that a network device receiving the IPv6 packet is to perform an action in the first IPv6 extension header on a data plane.

The sending unit 2006 is configured to send the IPv6 packet to the second network device.

Optionally, the IPv6 header includes next header information, and the next header information indicates that a next header of the IPv6 header is the first IPv6 extension header.

Optionally, the next header information further indicates that the network device receiving the IPv6 packet is to process the first IPv6 extension header on the data plane.

Optionally, the first IPv6 extension header includes option information, the option information includes option type information and option data, and the option type information indicates a type of the option information and a length of the option data.

Optionally, the first IPv6 extension header includes option information; the option information includes option type information, option length information, and option data; the option type information indicates a type of the option information and a length of the option data; and the option length information indicates the length of the option data.

Optionally, the first IPv6 extension header includes first option information and second option information, the first option information includes first option type information and first option data, the second option information includes second option type information and second option data, the first option type information indicates a type of the first option information and a length of the first option data, and the second option type information indicates a type of the second option information and a length of the second option data.

Optionally, the first IPv6 extension header includes a bitmap, the bitmap includes a first bit and a second bit, the first bit indicates the first option type information, and the second bit indicates the second option type information.

Optionally, the IPv6 packet further includes a second IPv6 extension header, the second IPv6 extension header indicates that the network device receiving the IPv6 packet is to perform an action in the second IPv6 extension header on a control plane, and the second IPv6 extension header is a next header of the first IPv6 extension header.

Optionally, the first IPv6 extension header includes processing plane information, and the processing plane information indicates that the network device receiving the IPv6 packet is to perform the action in the first IPv6 extension header on the data plane.

Optionally, the first IPv6 extension header includes processing policy information, and the processing policy information indicates an action to be performed by the network device receiving the IPv6 packet on at least one piece of option information included in the first IPv6 extension header.

Optionally, the first network device further includes a receiving unit, and the receiving unit is configured to receive a packet from a previous-hop network device of the first network device.

The first network device shown in FIG. 10 may perform corresponding steps performed by the first network device in the method in the foregoing embodiment. The first network device sends, to the second network device, the IPv6 packet that carries the IPv6 header and the IPv6 extension header. Correspondingly, the second network device receives the IPv6 packet sent by the first network device, and performs the action in the IPv6 extension header on a corresponding processing plane of the second network device based on the IPv6 header and the IPv6 extension header in the IPv6 packet, so as to ensure that the IPv6 packet can be normally forwarded by the second network device.

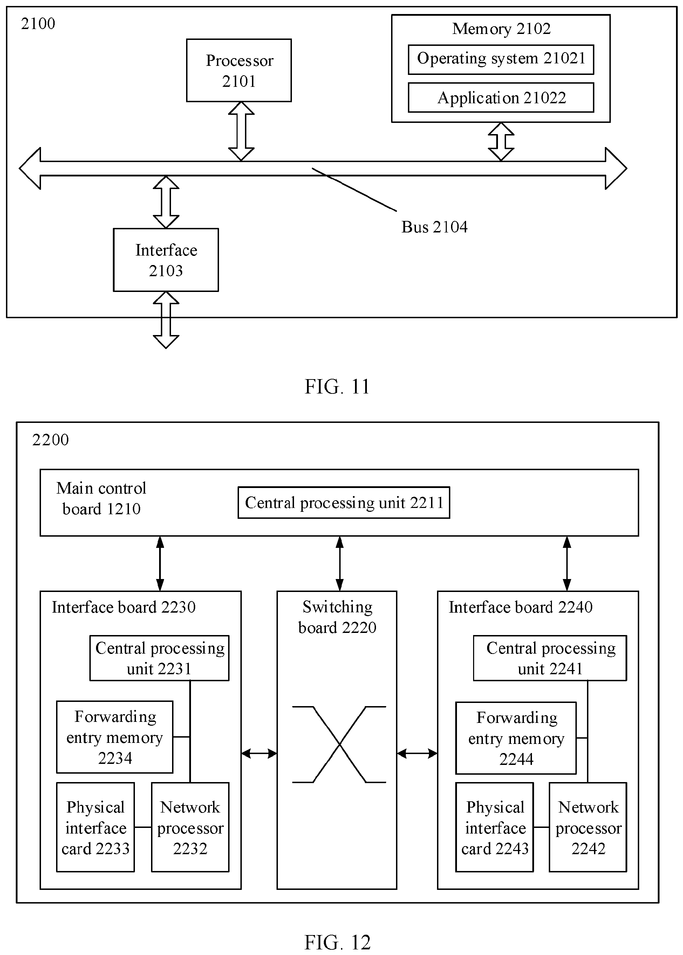

FIG. 11 is a schematic diagram of a hardware structure of a first network device 2100 according to an embodiment of this application. The first network device 2100 shown in FIG. 11 may perform corresponding steps performed by the first network device in the method in the foregoing embodiment.

As shown in FIG. 11, the first network device 2100 includes a processor 2101, a memory 2102, an interface 2103, and a bus 2104. The interface 2103 may be implemented in a wireless or wired manner. The processor 2101, the memory 2102, and the interface 2103 are connected through the bus 2104.

The interface 2103 may specifically include a transmitter and a receiver, and is used by the first network device to receive information or data from and send information or data to the second network device in the foregoing embodiment. For example, the interface 2103 is configured to support sending an IPv6 packet to the second network device. For another example, the interface 2103 is configured to support receiving a packet sent by a previous-hop network device of the first network device. For example, the interface 2103 is configured to support the process S102 in FIG. 3. The processor 2101 is configured to perform processing performed by the first network device in the foregoing embodiment. For example, the processor 2101 is configured to process the IPv6 packet; and/or support another process used in the technology described in this specification. For example, the processor 2101 is configured to support the process S101 in FIG. 3. The memory 2102 includes an action system 21021 and an application 21022, and is configured to store a program, code, or instructions. When executing the program, the code, or the instructions, the processor or a hardware device can complete the processing processes related to the first network device in the foregoing method embodiment. Optionally, the memory 2102 may include a read-only memory (Read-only Memory, ROM) and a random access memory (Random Access Memory, RAM). The ROM includes a basic input/output system (Basic Input/Output System, BIOS) or an embedded system, and the RAM includes an application and an action system. When the first network device 2100 needs to be run, a bootloader in the BIOS or the embedded system that is fixed in the ROM is used to boot a system to be started, to boot the first network device 2100 to enter a normal running state. After entering the normal running state, the first network device 2100 runs the application and the action system in the RAM, to complete processing process related to the first network device in the method embodiment.

It may be understood that FIG. 11 shows only a simplified design of the first network device 2100. In actual application, the first network device may include any quantity of interfaces, processors, or memories.

FIG. 12 is a schematic diagram of a hardware structure of another first network device 2200 according to an embodiment of this application. The first network device 2200 shown in FIG. 12 may perform corresponding steps performed by the first network device in the method in the foregoing embodiment.

As shown in FIG. 12, the first network device 2200 includes a main control board 2210, an interface board 2230, a switching board 2220, and an interface board 2240. The main control board 2210, the interface boards 2230 and 2240, and the switching board 2220 are connected to a system backboard through a system bus for mutual communication. The main control board 2210 is configured to complete functions such as system management, device maintenance, and protocol processing. The switching board 2220 is configured to implement data exchange between interface boards (the interface board is also referred to as a line card or a service board). The interface boards 2230 and 2240 are configured to provide various service interfaces (for example, a POS interface, a GE interface, and an ATM interface), and forward a data packet.

The interface board 2230 may include a central processing unit 2231, a forwarding entry memory 2234, a physical interface card 2233, and a network processor 2232. The central processing unit 2231 is configured to control and manage the interface board, and communicate with a central processing unit 2211 on the main control board 2210. The forwarding entry memory 2234 is configured to store a forwarding entry. The physical interface card 2233 is configured to receive and send traffic. The network memory 2232 is configured to control, based on the forwarding entry, the physical interface card 2233 to receive and send the traffic.

Specifically, the physical interface card 2233 is configured to send an IPv6 packet to the first network device. The physical interface card 2233 is further configured to receive a packet sent by a previous-hop network device of the first network device.

In a possible implementation, the central processing unit 2211 generates an IPv6 packet, and sends the IPv6 packet to the central processing unit 2231. The IPv6 packet is sent to the second network device by using the physical interface card 2233.

In another possible implementation, the physical interface card 2233 receives a packet sent by a previous-hop network device of the first network device, the central processing unit 2231 processes the packet to obtain an IPv6 packet, and the IPv6 packet is sent to the second network device by using the physical interface card 2233.

The central processing unit 2231 is further configured to control the network memory 2232 to obtain the forwarding entry from the forwarding entry memory 2234, and the central processing unit 2231 is further configured to control the network memory 2232 to receive and send the traffic by using the physical interface card 2233.

It should be understood that actions of the interface board 2240 are consistent with actions of the interface board 2230 in this embodiment of the present invention. For brevity, details are not described again. It should be understood that the first network device 2200 in this embodiment may correspond to the functions and/or the various steps implemented in the foregoing method embodiment. Details are not described herein again.

In addition, it should be noted that there may be one or more main control boards, and when there are a plurality of main control boards, the main control boards may include an active main control board and a standby main control board. There may be one or more interface boards, and the first network device with a stronger data processing capability provides more interface boards. There may also be one or more physical interface cards on the interface board. There may be no switching board, or there may be one or more switching boards. When there are a plurality of switching boards, load sharing and redundancy backup may be implemented jointly. In a centralized forwarding architecture, the first network device may not need a switching board. The interface board implements a service data processing function of the entire system. In a distributed forwarding architecture, the first network device may have at least one switching board. Data is exchanged between a plurality of interface boards by using the switching board, to provide a large-capacity data exchange and processing capability. Therefore, a data access and processing capability of the first network device in the distributed architecture is better than that of the first network device in the centralized architecture. A specific architecture to be used depends on a specific networking deployment scenario. This is not limited herein.

In addition, an embodiment of this application provides a computer storage medium configured to store computer software instructions used by the foregoing first network device. The computer software instructions include a program designed for performing the foregoing method embodiment.

An embodiment of this application further includes a network system. The network system includes a second network device and a first network device. The second network device is the second network device in FIG. 7, FIG. 8, or FIG. 9, and the first network device is the first network device in FIG. 10, FIG. 11, or FIG. 12.

Method or algorithm steps described in combination with the content disclosed in this application may be implemented by hardware, or may be implemented by a processor by executing software instructions. The software instructions may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may further be a component of the processor. The processor and the storage medium may be located in an ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware or software. When the present invention is implemented by software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a general-purpose or dedicated computer.

The objectives, technical solutions, and beneficial effects of this application are further described in detail in the foregoing specific implementations. It should be understood that the foregoing descriptions are merely specific implementations of this application.

## Claims

1. A packet processing method, wherein the method comprises:
receiving (S103), by a second network device, an internet protocol version 6, IPv6, packet sent by a first network device, wherein the IPv6 packet comprises an IPv6 header and a first IPv6 extension header, the IPv6 header indicates that a protocol type of the IPv6 packet is IPv6, and the IPv6 header further indicates that a network device receiving the IPv6 packet is to perform an action in the first IPv6 extension header on a data plane; and
performing (S104), by the second network device, the action in the first IPv6 extension header on the data plane of the second network device based on the IPv6 header and the first IPv6 extension header;
wherein the second network device comprises a control plane and the data plane; and
wherein the control plane is configured to control and manage running of a network protocol on a communications network and provide various network information; and
wherein the data plane is configured to process and forward various types of data on an interface of the network device.

2. The method according to claim 1, wherein the IPv6 header comprises next header information, and the next header information indicates that a next header of the IPv6 header is the first IPv6 extension header.

3. The method according to claim 2, wherein the next header information further indicates that the network device receiving the IPv6 packet is to process the first IPv6 extension header on the data plane.

4. The method according to claim 2 or 3, wherein the performing (S104), by the second network device, the action in the first IPv6 extension header on the data plane of the second network device based on the IPv6 header and the first IPv6 extension header comprises:
determining, by the second network device based on the next header information, that the next header of the IPv6 header is the first IPv6 extension header; and
performing, by the second network device, the action in the first IPv6 extension header on the data plane of the second network device based on the first IPv6 extension header.

5. The method according to any one of claims 1 to 4, wherein the first IPv6 extension header comprises option information, the option information comprises option type information and option data, and the option type information indicates a type of the option information and a length of the option data.

6. The method according to any one of claims 1 to 4, wherein the first IPv6 extension header comprises option information, the option information comprises option type information, option length information, and option data, the option type information indicates a type of the option information and a length of the option data, the option length information indicates the length of the option data, and before the performing, by the second network device, the action in the first IPv6 extension header on the data plane of the second network device based on the IPv6 header and the first IPv6 extension header, the method further comprises:
determining, by the second network device, that the option type information can be identified; and
determining, by the second network device, the length of the option data based on the option type information but not based on the option length information.

7. The method according to any one of claims 1 to 4, wherein the first IPv6 extension header comprises option information; the option information comprises option type information, option length information, and option data; the option type information indicates a type of the option information and a length of the option data; the option length information indicates the length of the option data; and before the performing, by the second network device, the action in the first IPv6 extension header on the data plane of the second network device based on the IPv6 header and the first IPv6 extension header, the method further comprises:
determining, by the second network device, that the option type information cannot be identified; and
determining, by the second network device, the length of the option data based on the option length information.

8. The method according to any one of claims 1 to 4, wherein the first IPv6 extension header comprises first option information and second option information, the first option information comprises first option type information and first option data, the second option information comprises second option type information and second option data, the first option type information indicates a type of the first option information and a length of the first option data, and the second option type information indicates a type of the second option information and a length of the second option data.

9. The method according to claim 8, wherein the first IPv6 extension header comprises a bitmap, the bitmap comprises a first bit and a second bit, the first bit indicates the first option type information, and the second bit indicates the second option type information.

10. The method according to any one of claims 1 to 9, wherein the IPv6 packet further comprises a second IPv6 extension header, the second IPv6 extension header indicates that the network device receiving the IPv6 packet is to perform an action in the second IPv6 extension header on a control plane, the second IPv6 extension header is a next header of the first IPv6 extension header, and the method further comprises:
performing, by the second network device, the action in the second IPv6 extension header on the control plane of the second network device based on the first IPv6 extension header and the second IPv6 extension header.

11. The method according to claim 1 or 2, wherein the first IPv6 extension header comprises processing plane information, and the processing plane information indicates that the network device receiving the IPv6 packet is to perform the action in the first IPv6 extension header on the data plane.

12. The method according to any one of claims 1 to 11, wherein the first IPv6 extension header comprises processing policy information, and the processing policy information indicates an action to be performed by the network device receiving the IPv6 packet on at least one piece of option information comprised in the first IPv6 extension header.

13. The method according to any one of claims 1 to 12, wherein the first IPv6 extension header is processed by a network device at each hop of a path for transmitting the IPv6 packet.

14. The method according to any one of claims 1 to 12, wherein the first IPv6 extension header is a hop-by-hop, HBH, option header.

15. A packet processing method, wherein the method comprises:
generating (S101), by a first network device, an internet protocol version 6, IPv6, packet, wherein the IPv6 packet comprises an IPv6 header and a first IPv6 extension header, the IPv6 header indicates a protocol type of the IPv6 packet is IPv6, and the IPv6 header further indicates that a network device receiving the IPv6 packet is to perform an action in the first IPv6 extension header on a data plane; and
sending (S102), by the first network device, the IPv6 packet to a second network device;
wherein the second network device comprises a control plane and the data plane; and
wherein the control plane is configured to control and manage running of a network protocol on a communications network and provide various network information; and
wherein the data plane is configured to process and forward various types of data on an interface of the network device.

16. The method according to claim 15, wherein the IPv6 header comprises next header information, and the next header information indicates that a next header of the IPv6 header is the first IPv6 extension header.

17. The method according to claim 16, wherein the next header information further indicates that the network device receiving the IPv6 packet is to process the first IPv6 extension header on the data plane.

18. The method according to any one of claims 15 to 17, wherein the first IPv6 extension header comprises option information, the option information comprises option type information and option data, and the option type information indicates a type of the option information and a length of the option data.

19. The method according to any one of claims 15 to 17, wherein the first IPv6 extension header is a hop-by-hop, HBH, option header.

20. A network device, comprising a processor (1101) and a memory (1102), wherein the memory (1102) is configured to store a program, and the processor (1101) is configured to invoke the program from the memory (1102) and run the program to perform the method according to any one of claims 1 to 14.

21. A network device, comprising a processor (2101) and a memory (2102), wherein the memory (2102) is configured to store a program, and the processor (2101) is configured to invoke the program from the memory (2102) and run the program to perform the method according to any one of claims 15 to 19.

22. A network system, wherein the network system comprises a first network device and a second network device, the first network device is the network device according to claim 20, and the second network device is the network device according to claim 21.

## Patentansprüche

1. Paketverarbeitungsverfahren, wobei das Verfahren umfasst:
Empfangen (S103), durch eine zweite Netzwerkvorrichtung, eines Internet Protocol Version 6(IPv6)-Pakets, das von einer ersten Netzwerkvorrichtung gesendet wird, wobei das IPv6-Paket einen IPv6-Header und einen ersten IPv6-Erweiterungsheader umfasst, der IPv6-Header angibt, dass ein Protokolltyp des IPv6-Pakets IPv6 ist, und der IPv6-Header ferner angibt, dass eine Netzwerkvorrichtung, die das IPv6-Paket empfängt, eine Aktion in dem ersten IPv6-Erweiterungsheader auf einer Datenebene durchführen soll; und
Durchführen (S 104), durch die zweite Netzwerkvorrichtung, der Aktion in dem ersten IPv6-Erweiterungsheader auf der Datenebene der zweiten Netzwerkvorrichtung basierend auf dem IPv6-Header und dem ersten IPv6-Erweiterungsheader;
wobei die zweite Netzwerkvorrichtung eine Steuerungsebene und die Datenebene umfasst; und
wobei die Steuerungsebene konfiguriert ist, um den Betrieb eines Netzwerkprotokolls in einem Kommunikationsnetzwerk zu steuern und zu verwalten sowie verschiedene Netzwerkinformationen bereitzustellen; und
wobei die Datenebene konfiguriert ist, um verschiedene Arten von Daten auf einer Schnittstelle der Netzwerkvorrichtung zu verarbeiten und weiterzuleiten.

2. Verfahren nach Anspruch 1, wobei der IPv6-Header Informationen zu einem nächsten Header umfasst und die Informationen zu dem nächsten Header angeben, dass ein nächster Header des IPv6-Headers der erste IPv6-Erweiterungsheader ist.

3. Verfahren nach Anspruch 2, wobei die Informationen zu dem nächsten Header ferner angeben, dass die Netzwerkvorrichtung, die das IPv6-Paket empfängt, den ersten IPv6-Erweiterungsheader auf der Datenebene verarbeiten soll.

4. Verfahren nach Anspruch 2 oder 3, wobei das Durchführen (S104), durch die zweite Netzwerkvorrichtung, der Aktion in dem ersten IPv6-Erweiterungsheader auf der Datenebene der zweiten Netzwerkvorrichtung basierend auf dem IPv6-Header und dem ersten IPv6-Erweiterungsheader umfasst:
Bestimmen, durch die zweite Netzwerkvorrichtung basierend auf den Informationen zu dem nächsten Header, dass der nächste Header des IPv6-Headers der erste IPv6-Erweiterungsheader ist; und
Durchführen, durch die zweite Netzwerkvorrichtung, der Aktion in dem ersten IPv6-Erweiterungsheader auf der Datenebene der zweiten Netzwerkvorrichtung basierend auf dem ersten IPv6-Erweiterungsheader.

5. Verfahren nach einem der Ansprüche 1 bis 4, wobei der erste IPv6-Erweiterungsheader Optionsinformationen umfasst, die Optionsinformationen Informationen zum Optionstyp und Optionsdaten umfassen, und die Informationen zum Optionstyp einen Typ der Optionsinformationen und eine Länge der Optionsdaten angeben.

6. Verfahren nach einem der Ansprüche 1 bis 4, wobei der erste IPv6-Erweiterungsheader Optionsinformationen umfasst, die Optionsinformationen Informationen zum Optionstyp, Informationen zur Optionslänge und Optionsdaten umfassen, die Informationen zum Optionstyp einen Typ der Optionsinformationen und eine Länge der Optionsdaten angeben, die Informationen zur Optionslänge die Länge der Optionsdaten angeben, und wobei das Verfahren vor dem Durchführen, durch die zweite Netzwerkvorrichtung, der Aktion in dem ersten IPv6-Erweiterungsheader auf der Datenebene der zweiten Netzwerkvorrichtung basierend auf dem IPv6-Header und dem ersten IPv6-Erweiterungsheader ferner umfasst:
Bestimmen, durch die zweite Netzwerkvorrichtung, dass die Informationen zum Optionstyp identifiziert werden können; und
Bestimmen, durch die zweite Netzwerkvorrichtung, der Länge der Optionsdaten basierend auf den Informationen zum Optionstyp, jedoch nicht basierend auf den Informationen zur Optionslänge.

7. Verfahren nach einem der Ansprüche 1 bis 4, wobei der erste IPv6-Erweiterungsheader Optionsinformationen umfasst, die Optionsinformationen Informationen zum Optionstyp, Informationen zur Optionslänge und Optionsdaten umfassen, die Informationen zum Optionstyp einen Typ der Optionsinformationen und eine Länge der Optionsdaten angeben, die Informationen zur Optionslänge die Länge der Optionsdaten angeben, und wobei das Verfahren vor dem Durchführen, durch die zweite Netzwerkvorrichtung, der Aktion in dem ersten IPv6-Erweiterungsheader auf der Datenebene der zweiten Netzwerkvorrichtung basierend auf dem IPv6-Header und dem ersten IPv6-Erweiterungsheader ferner umfasst:
Bestimmen, durch die zweite Netzwerkvorrichtung, dass die Informationen zum Optionstyp nicht identifiziert werden können; und
Bestimmen, durch die zweite Netzwerkvorrichtung, der Länge der Optionsdaten basierend auf den Informationen zur Optionslänge.

8. Verfahren nach einem der Ansprüche 1 bis 4, wobei der erste IPv6-Erweiterungsheader erste Optionsinformationen und zweite Optionsinformationen umfasst, die ersten Optionsinformationen erste Informationen zum Optionstyp und erste Optionsdaten umfassen, die zweiten Optionsinformationen zweite Informationen zum Optionstyp und zweite Optionsdaten umfassen, die ersten Informationen zum Optionstyp einen Typ der ersten Optionsinformationen und eine Länge der ersten Optionsdaten angeben, und die zweiten Informationen zum Optionstyp einen Typ der zweiten Optionsinformationen und eine Länge der zweiten Optionsdaten angeben.

9. Verfahren nach Anspruch 7, wobei der erste IPv6-Erweiterungsheader eine Bitmap umfasst, die Bitmap ein erstes Bit und ein zweites Bit umfasst, das erste Bit die ersten Informationen zum Optionstyp angibt und das zweite Bit die zweiten Informationen zum Optionstyp angibt.

10. Verfahren nach einem der Ansprüche 1 bis 9, wobei das IPv6-Paket ferner einen zweiten IPv6-Erweiterungsheader umfasst, der zweite IPv6-Erweiterungsheader angibt, dass die Netzwerkvorrichtung, die das IPv6-Paket empfängt, eine Aktion in dem zweiten IPv6-Erweiterungsheader auf einer Steuerungsebene durchführen soll, der zweite IPv6-Erweiterungsheader ein nächster Header des ersten IPv6-Erweiterungsheaders ist, und das Verfahren ferner umfasst:
Durchführen, durch die zweite Netzwerkvorrichtung, der Aktion in dem zweiten IPv6-Erweiterungsheader auf der Steuerungsebene der zweiten Netzwerkvorrichtung basierend auf dem ersten IPv6-Erweiterungsheader und dem zweiten IPv6-Erweiterungsheader.

11. Verfahren nach Anspruch 1 oder 2, wobei der erste IPv6-Erweiterungsheader Verarbeitungsebeneninformationen umfasst und die Verarbeitungsebeneninformationen angeben, dass die Netzwerkvorrichtung, die das IPv6-Paket empfängt, die Aktion in dem ersten IPv6-Erweiterungsheader auf der Datenebene durchführen soll.

12. Verfahren nach einem der Ansprüche 1 bis 11, wobei der erste IPv6-Erweiterungsheader Verarbeitungsrichtlinieninformationen umfasst und die Verarbeitungsrichtlinieninformationen eine Aktion angeben, die durch die Netzwerkvorrichtung, die das IPv6-Paket empfängt, auf mindestens einem in dem ersten IPv6-Erweiterungsheader umfassten Optionsinformationselement durchgeführt werden soll.

13. Verfahren nach einem der Ansprüche 1 bis 12, wobei der erste IPv6-Erweiterungsheader durch eine Netzwerkvorrichtung an jedem Hop eines Pfads zur Übertragung des IPv6-Pakets verarbeitet wird.

14. Verfahren nach einem der Ansprüche 1 bis 12, wobei der erste IPv6-Erweiterungsheader ein Hop-by-Hop-(HBH-)Optionsheader ist.

15. Paketverarbeitungsverfahren, wobei das Verfahren umfasst:
Erzeugen (S101), durch eine erste Netzwerkvorrichtung, eines Internet Protocol Version 6(IPv6)-Pakets, wobei das IPv6-Paket einen IPv6-Header und einen ersten IPv6-Erweiterungsheader umfasst, der IPv6-Header angibt, dass ein Protokolltyp des IPv6-Pakets IPv6 ist, und der IPv6-Header ferner angibt, dass eine Netzwerkvorrichtung, die das IPv6-Paket empfängt, eine Aktion in dem ersten IPv6-Erweiterungsheader auf einer Datenebene durchführen soll; und
Senden (S102), durch die erste Netzwerkvorrichtung, des IPv6-Pakets an eine zweite Netzwerkvorrichtung;
wobei die zweite Netzwerkvorrichtung eine Steuerungsebene und die Datenebene umfasst; und
wobei die Steuerungsebene konfiguriert ist, um den Betrieb eines Netzwerkprotokolls in einem Kommunikationsnetzwerk zu steuern und zu verwalten sowie verschiedene Netzwerkinformationen bereitzustellen; und
wobei die Datenebene konfiguriert ist, um verschiedene Arten von Daten auf einer Schnittstelle der Netzwerkvorrichtung zu verarbeiten und weiterzuleiten.

16. Verfahren nach Anspruch 15, wobei der IPv6-Header Informationen zu einem nächsten Header umfasst und die Informationen zu dem nächsten Header angeben, dass ein nächster Header des IPv6-Headers der erste IPv6-Erweiterungsheader ist.

17. Verfahren nach Anspruch 16, wobei die Informationen zu dem nächsten Header ferner angeben, dass die Netzwerkvorrichtung, die das IPv6-Paket empfängt, den ersten IPv6-Erweiterungsheader auf der Datenebene verarbeiten soll.

18. Verfahren nach einem der Ansprüche 15 bis 17, wobei der erste IPv6-Erweiterungsheader Optionsinformationen umfasst, die Optionsinformationen Informationen zum Optionstyp und Optionsdaten umfassen und die Informationen zum Optionstyp einen Typ der Optionsinformationen und eine Länge der Optionsdaten angeben.

19. Verfahren nach einem der Ansprüche 15 bis 17, wobei der erste IPv6-Erweiterungsheader ein Hop-by-Hop- (HBH-) Optionsheader ist.

20. Netzwerkvorrichtung, umfassend einen Prozessor (1101) und einen Speicher (1102), wobei der Speicher (1102) konfiguriert ist, um ein Programm zu speichern, und der Prozessor (1101) konfiguriert ist, um das Programm aus dem Speicher (1102) aufzurufen und das Programm auszuführen, um das Verfahren nach einem der Ansprüche 1 bis 14 durchzuführen.

21. Netzwerkvorrichtung, umfassend einen Prozessor (2101) und einen Speicher (2102), wobei der Speicher (2102) konfiguriert ist, um ein Programm zu speichern, und der Prozessor (2101) konfiguriert ist, um das Programm aus dem Speicher (2102) aufzurufen und das Programm auszuführen, um das Verfahren nach einem der Ansprüche 15 bis 19 durchzuführen.

22. Netzwerksystem, wobei das Netzwerksystem eine erste Netzwerkvorrichtung und eine zweite Netzwerkvorrichtung umfasst, die erste Netzwerkvorrichtung die Netzwerkvorrichtung nach Anspruch 20 ist und die zweite Netzwerkvorrichtung die Netzwerkvorrichtung nach Anspruch 21 ist.

## Revendications

1. Procédé de traitement de paquets, le procédé comprenant :
la réception (S103), par un deuxième dispositif de réseau, d'un paquet en protocole internet de version 6, IPv6, envoyé par un premier dispositif de réseau, dans lequel le paquet IPv6 comprend un en-tête IPv6 et un premier en-tête d'extension IPv6, l'en-tête IPv6 indiquant qu'un type de protocole du paquet IPv6 est IPv6, et l'en-tête IPv6 indiquant en outre qu'un dispositif de réseau recevant le paquet IPv6 doit réaliser une action dans le premier en-tête d'extension IPv6 sur un plan de données ; et
la réalisation (S104), par le deuxième dispositif de réseau, de l'action dans le premier en-tête d'extension IPv6 sur le plan de données du deuxième dispositif de réseau sur la base de l'en-tête IPv6 et du premier en-tête d'extension IPv6 ;
dans lequel le deuxième dispositif de réseau comprend un plan de commande et le plan de données ; et
dans lequel le plan de commande est configuré pour commander et gérer le fonctionnement d'un protocole de réseau sur un réseau de communications et fournir diverses informations de réseau ; et
dans lequel le plan de données est configuré pour traiter et acheminer divers types de données sur une interface du dispositif de réseau.

2. Procédé selon la revendication 1, dans lequel l'en-tête IPv6 comprend des informations d'en-tête suivant, et les informations d'en-tête suivant indiquent qu'un en-tête suivant de l'en-tête IPv6 est le premier en-tête d'extension IPv6.

3. Procédé selon la revendication 2, dans lequel les informations d'en-tête suivant indiquent en outre que le dispositif de réseau recevant le paquet IPv6 doit traiter le premier en-tête d'extension IPv6 sur le plan de données.

4. Procédé selon la revendication 2 ou 3, dans lequel la réalisation (S104), par le deuxième dispositif de réseau, de l'action dans le premier en-tête d'extension IPv6 sur le plan de données du deuxième dispositif de réseau sur la base de l'en-tête IPv6 et du premier en-tête d'extension IPv6 comprend :
la détermination, par le deuxième dispositif de réseau sur la base des informations d'en-tête suivant, que l'en-tête suivant de l'en-tête IPv6 est le premier en-tête d'extension IPv6 ; et
la réalisation, par le deuxième dispositif de réseau, de l'action dans le premier en-tête d'extension IPv6 sur le plan de données du deuxième dispositif de réseau sur la base du premier en-tête d'extension IPv6.

5. Procédé selon l'une quelconque des revendications 1 à 4, dans lequel le premier en-tête d'extension IPv6 comprend des informations d'option, les informations d'option comprennent des informations de type d'option et des données d'option, et les informations de type d'option indiquent un type des informations d'option et une longueur des données d'option.

6. Procédé selon l'une quelconque des revendications 1 à 4, dans lequel le premier en-tête d'extension IPv6 comprend des informations d'option, les informations d'option comprennent des informations de type d'option, des informations de longueur d'option, et des données d'option, les informations de type d'option indiquent un type des informations d'option et une longueur des données d'option, les informations de longueur d'option indiquent la longueur des données d'option, et avant la réalisation, par le deuxième dispositif de réseau, de l'action dans le premier en-tête d'extension IPv6 sur le plan de données du deuxième dispositif de réseau sur la base de l'en-tête IPv6 et du premier en-tête d'extension IPv6, le procédé comprend en outre :
la détermination, par le deuxième dispositif de réseau, que les informations de type d'option peuvent être identifiées ; et
la détermination, par le deuxième dispositif de réseau, de la longueur des données d'option sur la base des informations de type d'option mais pas sur la base des informations de longueur d'option.

7. Procédé selon l'une quelconque des revendications 1 à 4, dans lequel le premier en-tête d'extension IPv6 comprend des informations d'option ; les informations d'option comprennent des informations de type d'option, des informations de longueur d'option, et des données d'option ; les informations de type d'option indiquent un type des informations d'option et une longueur des données d'option ; les informations de longueur d'option indiquent la longueur des données d'option ; et avant la réalisation, par le deuxième dispositif de réseau, de l'action dans le premier en-tête d'extension IPv6 sur le plan de données du deuxième dispositif de réseau sur la base de l'en-tête IPv6 et du premier en-tête d'extension IPv6, le procédé comprend en outre :
la détermination, par le deuxième dispositif de réseau, que les informations de type d'option ne peuvent pas être identifiées ; et
la détermination, par le deuxième dispositif de réseau, de la longueur des données d'option sur la base des informations de longueur d'option.

8. Procédé selon l'une quelconque des revendications 1 à 4, dans lequel le premier en-tête d'extension IPv6 comprend des premières informations d'option et des deuxièmes informations d'option, les premières informations d'option comprennent des premières informations de type d'option et des premières données d'option, les deuxièmes informations d'option comprennent des deuxièmes informations de type d'option et des deuxièmes données d'option, les premières informations de type d'option indiquent un type des premières informations d'option et une longueur des premières données d'option, et les deuxièmes informations de type d'option indiquent un type des deuxièmes informations d'option et une longueur des deuxièmes données d'option.

9. Procédé selon la revendication 8, dans lequel le premier en-tête d'extension IPv6 comprend une table de bits, la table de bits comprend un premier bit et un deuxième bit, le premier bit indique les premières informations de type d'option, et le deuxième bit indique les deuxièmes informations de type d'option.

10. Procédé selon l'une quelconque des revendications 1 à 9, dans lequel le paquet IPv6 comprend en outre un deuxième en-tête d'extension IPv6, le deuxième en-tête d'extension IPv6 indique que le dispositif de réseau recevant le paquet IPv6 doit réaliser une action dans le deuxième en-tête d'extension IPv6 sur un plan de commande, le deuxième en-tête d'extension IPv6 est un en-tête suivant du premier en-tête d'extension IPv6, et le procédé comprend en outre :
la réalisation, par le deuxième dispositif de réseau, de l'action dans le deuxième en-tête d'extension IPv6 sur le plan de commande du deuxième dispositif de réseau sur la base du premier en-tête d'extension IPv6 et du deuxième en-tête d'extension IPv6.

11. Procédé selon la revendication 1 ou 2, dans lequel le premier en-tête d'extension IPv6 comprend des informations de plan de traitement, et les informations de plan de traitement indiquent que le dispositif de réseau recevant le paquet IPv6 doit réaliser l'action dans le premier en-tête d'extension IPv6 sur le plan de données.

12. Procédé selon l'une quelconque des revendications 1 à 11, dans lequel le premier en-tête d'extension IPv6 comprend des informations de politique de traitement, et les informations de politique de traitement indiquent qu'une action doit être réalisée par le dispositif de réseau recevant le paquet IPv6 sur au moins un élément d'informations d'option compris dans le premier en-tête d'extension IPv6.

13. Procédé selon l'une quelconque des revendications 1 à 12, dans lequel le premier en-tête d'extension IPv6 est traité par un dispositif de réseau au niveau de chaque saut d'un trajet pour la transmission du paquet IPv6.

14. Procédé selon l'une quelconque des revendications 1 à 12, dans lequel le premier en-tête d'extension IPv6 est un en-tête d'option saut-par-saut, HBH.

15. Procédé de traitement de paquets, le procédé comprenant :
la génération (S101), par un premier dispositif de réseau, d'un paquet en protocole internet de version 6, IPv6, dans lequel le paquet IPv6 comprend un en-tête IPv6 et un premier en-tête d'extension IPv6, l'en-tête IPv6 indique qu'un type de protocole du paquet IPv6 est IPv6, et l'en-tête IPv6 indique en outre qu'un dispositif de réseau recevant le paquet IPv6 doit réaliser une action dans le premier en-tête d'extension IPv6 sur un plan de données ; et
l'envoi (S102), par le premier dispositif de réseau, du paquet IPv6 à un deuxième dispositif de réseau ;
dans lequel le deuxième dispositif de réseau comprend un plan de commande et le plan de données ; et
dans lequel le plan de commande est configuré pour commander et gérer le fonctionnement d'un protocole de réseau sur un réseau de communications et fournir diverses informations de réseau ; et
dans lequel le plan de données est configuré pour traiter et acheminer divers types de données sur une interface du dispositif de réseau.

16. Procédé selon la revendication 15, dans lequel l'en-tête IPv6 comprend des informations d'en-tête suivant, et les informations d'en-tête suivant indiquent qu'un en-tête suivant de l'en-tête IPv6 est le premier en-tête d'extension IPv6.

17. Procédé selon la revendication 16, dans lequel les informations d'en-tête suivant indiquent en outre que le dispositif de réseau recevant le paquet IPv6 doit traiter le premier en-tête d'extension IPv6 sur le plan de données.

18. Procédé selon l'une quelconque des revendications 15 à 17, dans lequel le premier en-tête d'extension IPv6 comprend des informations d'option, les informations d'option comprennent des informations de type d'option et des données d'option, et les informations de type d'option indiquent un type des informations d'option et une longueur des données d'option.

19. Procédé selon l'une quelconque des revendications 15 à 17, dans lequel le premier en-tête d'extension IPv6 est un en-tête d'option saut-par-saut, HBH.

20. Dispositif de réseau, comprenant un processeur (1101) et une mémoire (1102), dans lequel la mémoire (1102) est configurée pour stocker un programme, et le processeur (1101) est configuré pour solliciter le programme à partir de la mémoire (1102) et lancer le programme afin de réaliser le procédé selon l'une quelconque des revendications 1 à 14.

21. Dispositif de réseau, comprenant un processeur (2101) et une mémoire (2102), dans lequel la mémoire (2102) est configurée pour stocker un programme, et le processeur (2101) est configuré pour solliciter le programme à partir de la mémoire (2102) et lancer le programme afin de réaliser le procédé selon l'une quelconque des revendications 15 à 19.

22. Système de réseau, le système de réseau comprenant un premier dispositif de réseau et un deuxième dispositif de réseau, le premier dispositif de réseau étant le dispositif de réseau selon la revendication 20, et le deuxième dispositif de réseau étant le dispositif de réseau selon la revendication 21.
